# EUROPEAN PATENT SPECIFICATION

(11) **EP 1 772 934 B1**
(45) Date of publication and mention of the grant of the patent: **21.08.2013**
(21) Application number: 06020363.5
(22) Date of filing: 28.09.2006
(51) Int. Cl.: H02G 3/14

(54) **An electrical wiring accessory**
Electrisches Verkabelungszubehör
Accessoire de câblage électrique

(30) Priority: 05.10.2005 GB 0520219
(43) Date of publication of application: 11.04.2007
(73) Proprietor: Micart (Holdings) LLP, Hertfordshire EN8 7AN (GB)
(72) Inventor: Roberts, Stephen Christopher Dominic, Southport Merseyside PR8 4LP (GB)
(74) Representative: Ratcliffe, Susan Margaret

(56) References cited:
- WO-A2-2005/083861
- US-A- 5 456 373
- US-A1- 2005 181 675

## Description

This invention concerns electrical wiring accessories such as lighting switches and electrical appliance plug sockets to be located on a wall and preferably within a recessed wall box.

Such accessories commonly consist of a front plate with the lighting switches or terminal pin apertures exposed on the surface of the front plate, the plate being attached to a connection unit adapted to receive cabling and to be housed within the wall box using screws inserted through the front plate and into the wall box.

A recent development has provided extremely thin front plates which lie against the wall surface surrounding the wall box and protrude from the wall by only a few millimetres. Such plates are usually of metal and have a decorative appearance such as chromium plating or brass plating.

In a still further development, manufacturers have attempted to produce such a front plate without the attachment screws being exposed. This is usually done by having an inner front plate with the connection unit attached and having screws passing through the inner front plate to attach the accessory to the wall box whereupon an outer front plate is removably located on the inner front plate by means of lugs and recesses where the lugs are attached to a rear face of the front plate by spot welding or spin riveting. The process of attaching the lugs to the front plate means that the plate must be polished and plated subsequent to attachment or formation of the location lugs. This is a time consuming and expensive process and sometimes results in the mounting clips being inaccurately located so that the outer front plate does not fit properly to the inner front plate and the remainder of the accessory. Also, the location lugs may become damaged during fitting of the accessory, or subsequently, with the result that the front plate will not fit properly.

United States patent US 5,456,373 shows a cover plate assembly including a frame situated to overlie the wall and dimensioned to surround the wall box. A decorative cover plate is dimensioned to be received inside the frame and is held to the frame by magnetic strips.

United States patent application US 2005181675 (A1) shows a cover plate for an electrical outlet or electrical switch unit that includes an attachment element having one surface attached to an inside surface of the cover plate and another surface configured to be removably secured to a surface of the outlet or switch unit. In one embodiment, the attachment element comprises magnets to connect the cover plate to the outlet or switch unit.

International patent application WO 2005083861 (A2) refers to a wall flush mount supporting device for electric or electronic components comprising an external cover or finishing plate in perfectly co-planar position with the wall where the supporting device of the invention is recessed.

It is an object of the present invention to provide an electrical wiring accessory having a decorative front plate which does not require the use of welded or riveted mounting clips

According to the present invention there is provided an electrical wiring accessory according to claim 1.

The wall box may be arranged to be recessed within the wall.

The front plate may be of ferrous metal, having a decorative front face.

The front plate may have ferrous metal plates mounted on a rear face thereof.

The front plate may have at least one permanent magnet mounted on a rear face thereof.

The front plate may have at least one aperture to become aligned with said at least one aperture of the mounting plate.

Also according to the present invention there is provided a method of installing an electrical wiring accessory as set out in claim 7.

An embodiment of the invention will now be described, by way of example only, with reference to the accompanying drawings, in which:

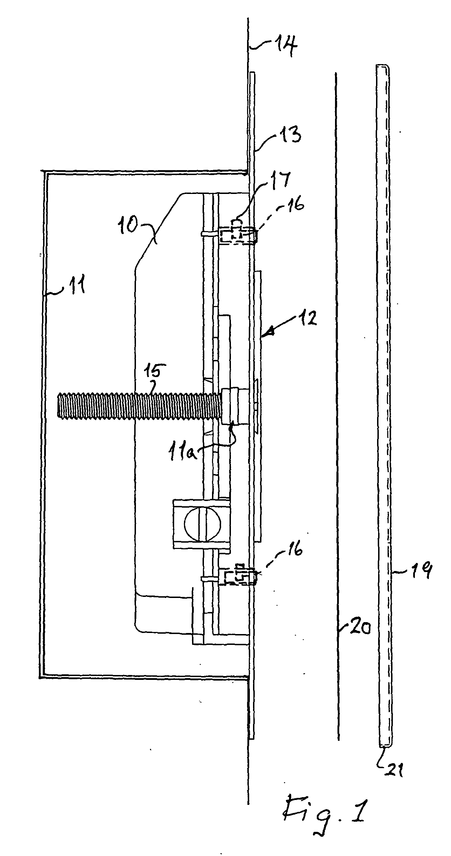

Fig 1: illustrates, in an exploded side view, an electrical wiring accessory made in accordance with the invention;

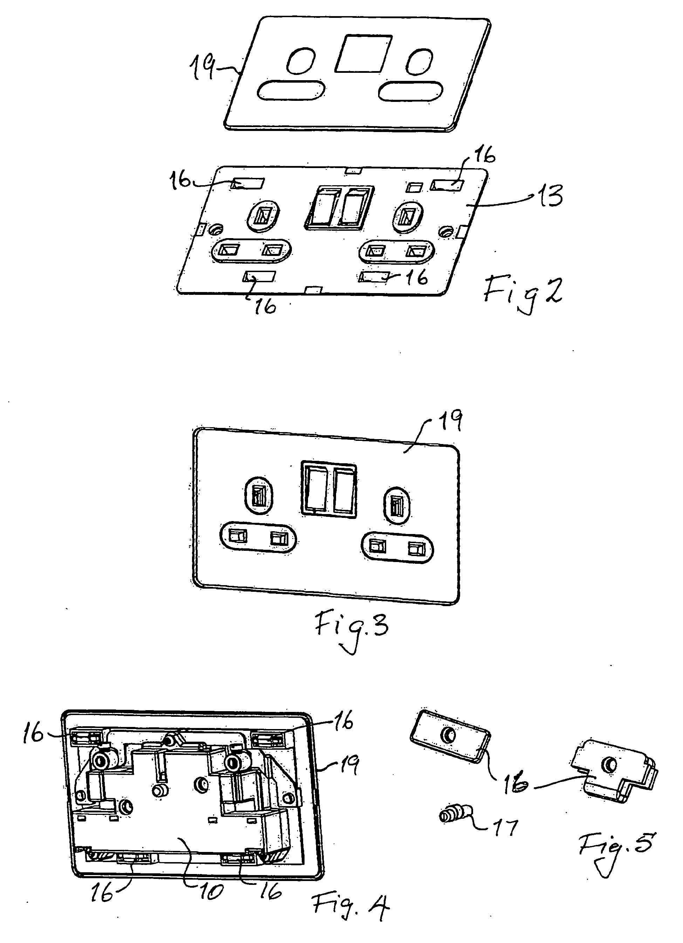

Fig. 2: is an exploded perspective view of the wiring accessory;
Fig 3: is a perspective view of the wiring accessory assembled:
Fig. 4: is a rear perspective view of the wiring accessory; and
Fig. 5: illustrates the individual parts of a magnetic attraction means of the accessory.

The accessory comprises a connection unit 10 housing terminal sockets for cabling and adapted to be located within a standard wall box 11 preferably but not necessarily recessed within a wall 14.

The connection unit 10, in this example, has a frontal region 12 in which are located a plurality of apertures to receive the terminal pins of an electrical appliance plug. Alternatively the frontal region may contain one or more switch toggles.

Riveted or otherwise permanently attached to the connection unit 10 is a mounting plate 13, preferably of steel or other magnetic substance which has similar apertures aligned with the apertures of the connection unit and which is of overall dimensions greater than the latter, thus to lie against the wall surface 14 surrounding the recess in which the wall box 11 is located.

Usually, the wall box itself has a pair of threaded lugs 11 a for receiving an associated pair of fixing screws 15 which pass through the mounting plate 13 and a part of the connection unit 10 to attach the unit 10 to the wall box.

Mounted in the connection unit 10 are a plurality of permanent magnets 16 each adjustably mounted as at 17 by a cam-shaped screw or the like so as to be adjustable forwardly and rearwardly with respect to the mounting plate 13.

In accordance with the invention, a decorative front plate 19 which may be of ferrous metal and chromium plated or have an otherwise decorative front surface, is installed over the mounting plate 13 and retained thereon by the magnets 16 when the connection unit 10 is mounted in the wall box 11.

In this way, the heads of the attachment screws 15 are concealed beneath the outer front plate 19 and the need for attachment clips or lugs on the rear face of the front plate 19 is replaced by the magnetic attraction of the front plate 19 to the connection unit.

The front plate 19 has one or more apertures similarly located to align with the apertures in the frontal region 12 of the connection unit and those in the mounting plate 13.

The front plate 19 may be of any material having a decorative appearance and will have a thickness in the region of 0.5 to 2 millimetres. If the front plate 19 is of a non-ferrous material, then one or more thin strips 20 of a ferrous material may be bonded to the rear face of the plate. Alternatively, thin strip magnets may be bonded to the rear face of the front plate, thus to be attracted to the mounting plate 13 which would be of a ferrous material.

In the example shown, the outer perimeter of the plate 19 is turned inwards as at 21 to conceal the edges of the mounting plate 13, in the assembled socket. Thus the edges 21 may rest upon the wall surface.

It will be appreciated that if the accessory takes the form of a lighting switch, then the switch toggles will protrude through the mounting plate and the front plate.

The or each magnet or magnetic strip, being adjustable in position on the connection unit, thus ensures adequate magnetic attraction of the front plate should the surface of the wall 14 be uneven causing a part of the front plate, for example, to be further spaced from the mounting plate 13 than other parts of the front plate.

It will be appreciated that an electrical wiring accessory made in accordance with the invention avoids the need for mounting clips to be welded or riveted to the front plate, and the accessory can therefore be produced more readily and less expensively. Fitting of the front plate is also facilitated.

## Claims

1. An electrical wiring accessory comprising a connection unit (10) adapted to receive cabling and to be at least partially housed within a wall box (11), wherein the connection unit (10) has a mounting plate (13) attached to a frontal region (12) of the connection unit and having at least one aperture locating one or more switch toggles and/or one or more terminal apertures for an electrical appliance plug, and a front plate (19) removably mounted or adapted to be removably mounted on the connection unit by magnetic attraction, with the mounting plate (13) being of overall dimensions greater than the connection unit (10) characterised at least one permanent magnet (16) is located on or within the connection unit (18) for magnetic attraction of the front plate (19) and the or each magnet (16) is adjustable in position by means (17) on the connection unit.

2. An electrical wiring accessory according to claim 1, including a wall box (11) which in use is recessed within a wall.

3. An electrical wiring accessory according to claim 1 or claim 2 wherein the front plate (19) is of ferrous metal having a decorative front face.

4. An electrical wiring accessory according to any preceding claims wherein the front plate (19) has ferrous metal plates (20) mounted on a rear face thereof.

5. An electrical wiring accessory according to Claim 1, wherein the front plate (19) has at least one permanent magnet mounted on a rear face thereof.

6. An electrical wiring accessory according to any preceding claim, wherein the front plate (19) has at least one aperture to become aligned with said at least one aperture of the mounting plate.

7. A method of installing an electrical wiring accessory according to any preceding claim comprising the steps of providing a connection unit (10) adapted to receive cabling, attaching said cabling thereto, and at least partially housing the connection unit within a wall box (11), providing a front plate (19) and, with magnetic means (16) removably mounting the front plate on the connection unit, **characterised in that** the magnetic means (16) can be adjusted forwardly and rearwardly with respect to the mounting plate to determine the correct location of the front plate over the wall box (11).

## Patentansprüche

1. Elektrisches Verdrahtungszubehör, umfassend eine für die Aufnahme einer Verkabelung adaptierte und zumindest teilweise in einem Wandkasten (11) untergebrachte Anschlusseinheit (10), worin an der Anschlusseinheit (10) eine Montageplatte (13) im Vorderbereich (12) derselben Anschlusseinheit befestigt ist, mit wenigstens einer Öffnung, welche einen oder mehrere Schalterknebel und/oder eine oder mehrere Klemmenöffnungen für einen Elektrogerätestecker aufweist, und eine mittels magnetischer Anziehung auf der Anschlusseinheit abnehmbar montierte oder zum abnehmbaren Montieren adaptierte Vorderplatte (19), wobei die Montageplatte (13) größere Gesamtabmessungen aufweist als die Anschlusseinheit (10), **dadurch gekennzeichnet, dass** wenigstens ein Dauermagnet (16) an oder in der Anschlusseinheit (18) zur magnetischen Anziehung der Vorderplatte (19) angeordnet ist, und dass die Position des oder eines jeden Magnets (16) mittels einer Einrichtung (17) an der Anschlusseinheit einstellbar ist.

2. Elektrisches Verdrahtungszubehör nach Anspruch 1, einschließlich eines Wandkastens (11), der während des Betriebs in eine Wand eingesenkt ist.

3. Elektrisches Verdrahtungszubehör nach Anspruch 1 oder 2, worin die Vorderplatte (19) aus Eisenmetall besteht und eine dekorative Vorderseite aufweist.

4. Elektrisches Verdrahtungszubehör nach einem der vorhergehenden Ansprüche, worin die Vorderplatte (19) auf einer Hinterseite derselben montierte Eisenmetallplatten (20) aufweist.

5. Elektrisches Verdrahtungszubehör nach Anspruch 1, worin die Vorderplatte (19) wenigstens einen, auf einer Hinterseite derselben montierten Dauermagneten aufweist.

6. Elektrisches Verdrahtungszubehör nach einem der vorhergehenden Ansprüche, worin die Vorderplatte (19) wenigstens eine Öffnung zum Ausrichten derselben mit der genannten, wenigstens einen Öffnung der Montageplatte aufweist.

7. Ein Verfahren zum Installioren von elektrischem Verdrahtungszubehör nach einem der vorhergehenden Ansprüche, umfassend die Schritte des Bereitstellens einer für die Aufnahme einer Verkabelung adaptierten Anschlusseinheit (10), des Befestigens der genannten Verkabelung an derselben und das wenigstens teilweise Unterbringen der Anschlusseinheit in einem Wandkasten (11), zum Bereitstellen einer Vorderplatte (19) und zum abnehmbaren Montieren der Vorderplatte an der Ansehlusseintteit mit der magnetischen Einrichtung (16), **dadurch gekennzeichnet, dass** die magnetische Einrichtung (16) zur Bestimmung der korrekten Position der Vorderplatte über dem Wandkasten (11) im Verhältnis zu der Montageplatte nach vorn und nach hinten verstellt werden kann.

## Revendications

1. Accessoire de câblage électrique comprenant un bloc de raccordement (10) adapté pour recevoir des câbles et devant être au moins partiellement logé dans un boîtier mural (11), I le bloc de raccordement (10) étant pourvu d'une plaque de fixation (13) fixée à une partie avant (12) du bloc de raccordement et ayant au moins une ouverture pour le positionnement d'une ou plusieurs bascules d'interrupteur et/ou une ou plusieurs ouvertures de raccordement pour une fiche d'appareil électrique, et une plaque avant (19) montée amovible ou adaptée pour être montée amovible sur le bloc de raccordement par attraction magnétique, la plaque de fixation (13) étant de dimensions supérieures à celles du bloc de raccordement (10), **caractérisé en ce qu'**au moins un aimant permanent (16) est placé sur ou dans le bloc de raccordement (18) pour l'attraction magnétique de la plaque avant (19) et la position de l'aimant ou de chaque aimant (16) est réglable au moyen de dispositifs (17) sur le bloc de raccordement.

2. Accessoire de câblage électrique selon la revendication 1, comprenant un boîtier mural (11) qui, lors de l'utilisation, est encastré dans un mur.

3. Accessoire de câblage électrique selon la revendication 1 ou la revendication 2, la plaque avant (19) étant en métal ferreux et pourvue d'une face avant décorative.

4. Accessoire de câblage électrique selon l'une des revendications précédentes, la plaque avant (19) comportant des plaques en métal ferreux (20) montées sur sa face arrière.

5. Accessoire de câblage électrique selon la revendication 1, la plaque avant (19) étant pourvue d'au moins un aimant permanent monté sur sa face arrière .

6. Accessoire de câblage électrique selon l'une des revendications précédentes, la plaque avant (19) présentant au moins une ouverture qui doit s'aligner avec ladite « au moins une ouverture » de la plaque de fixation.

7. Procédé d'installation d'un accessoire de câblage électrique selon l'une des revendications précédentes, comprenant les étapes consistant à utiliser un bloc de raccordement (10) adapté pour recevoir des câbles, attacher lesdits câbles et loger au moins partiellement le bloc de raccordement dans un boîtier mural (11), utiliser une plaque avant (19) et, par des moyens magnétiques (16) fixer la plaque avant de manière amovible sur le bloc de raccordement, caractérisé en que les moyens magnétiques (16) peuvent être ajustés vers l'avant et vers l'arrière par rapport à la plaque de fixation pour déterminer la position exacte de la plaque avant par-dessus le boîtier mural (11).
